# DEMANDE DE BREVET EUROPEEN

(11) **EP 1 236 681 A1**
(43) Date de publication de la demande: **04.09.2002**
(21) Numéro de dépôt: 02290463.5
(22) Date de dépôt: 26.02.2002
(51) Int. Cl.: C01B 31/12

(54) **Charbon actif à capacité d'adsorption élevée et à faible teneur en résiduel phosphorique, son procédé de préparation et des applications**

(30) Priorité: 01.03.2001 FR 0102820
(71) Demandeur: Pica, 92300 Levallois Perret (FR)
(72) Inventeur: Chesneau, Manuel, 45240 La Ferté Saint Aubin (FR); Pilard, Myriam, 75017 Paris (FR); Flasseur, Anne, 18310 Nohant en Graçay (FR); Dagois, Gérard, 92600 Asnières (FR)
(74) Mandataire: Rinuy, Santarelli

(57) **Abrégé**

L'invention propose un charbon actif ayant les caractéristiques suivantes :
- indice CCl4 compris entre 120% et 190%,
- teneur en P2O5 au plus égale à 2 %,
- pH d'extraction supérieur à 7,
- densité apparente comprise entre 0,18 g/ml et 0,32 g/ml, et
- résistivité électrique inférieure à 1,5 Ohm.cm.

## Description

L'invention concerne un charbon actif, son procédé de fabrication ainsi que des applications de ce produit, notamment dans le traitement d'eau.

Elle peut s'analyser comme une amélioration d'un charbon actif existant, connu sous la marque « PICABIOL ®» pour son utilisation dans le traitement de l'eau potable. En effet la société PICA a mis au point un procédé de traitement d'eau particulier mettant avantageusement en oeuvre ce produit dans un contacteur biologique d'épuration d'eau pour la production d'eau potable et procédé de pilotage associé (voir les brevets EP-0 377 356 B1, US-5 037 550 et US 5 087 354).

Dans ce procédé, il est mis en oeuvre un filtre rempli de charbon actif (type « PICABIOL ®») fonctionnant en mode biologique : le matériau carboné sert de support pour des bactéries qui peuvent dégrader des matières organiques bio-dégradables de l'eau à traiter. L'accrochage et le développement des bactéries (tailles comprises entre 0,5 et 2 µm) sur le matériau carboné sont rendus possibles par une macro-porosité adaptée (taille de pore supérieure à 500 Å). La présence de micro-pores (taille inférieure à 20 Å) et de méso-pores (taille comprise entre 20 et 500 Å) permet également un fonctionnement classique du filtre en adsorption.

L'adsorption de polluants organiques et inorganiques présents dans de l'eau, par du charbon actif, est très largement connue et utilisée en procédé (voir notamment : Porosity in Carbons, J.W.Patrick, 1995, ed. Edward Arnold). Ces polluants se classent ainsi : détergents, pesticides, herbicides, métaux en trace, hydrocarbures polycycliques aromatiques, composés organiques de faible solubilité, dérivés chlorés, espèces colorées ou odorantes, acides humiques, ...

Ce charbon actif « PICABIOL ® » est industriellement fabriqué par un procédé d'activation chimique classique. Un mélange de granulés de bois et d'acide phosphorique est chauffé en four rotatif vers 400-500°C, puis lavé, puis séché. Cette matière première et cette activation permettent d'obtenir notamment la macro-porosité recherchée pour l'activité biologique et la porosité plus petite utile pour l'adsorption, et ce matériau donne toute satisfaction dans de nombreux cas. Cependant, il possède une caractéristique généralement sous estimée, à savoir un résiduel massique de P2O5 (ou d'H3PO4 sous forme hydratée) non négligeable de 3 à 12%, qui peut constituer un handicap dans certains cas.

Les spécifications du produit « PICABIOL ® » sont résumées dans le tableau ci-dessous, étant précisé que les méthodes de mesure du résiduel P2O5, du pH d'extraction, de la résistivité électrique et de la surface BET sont des méthodes internes décrites ci-après :
* Résiduel P2O5 (en %) :
   Le charbon actif est mis en extraction aqueuse par un système classique de SOXHLET chauffé à ébullition pendant 12 heures (5 g de charbon actif pour 300 ml d'eau). Les eaux d'extraction et de rinçage sont récupérées puis complétées à 500 ml par de l'eau déminéralisée.
   Le dosage du P2O5 commence par la préparation d'une solution mère de KH2PO4 de titre connu ; elle sert à la préparation, par différentes dilutions, des solutions d'étalon. Ces solutions d'étalon sont mises en contact avec un réactif Vanado-molybdique, puis analysées par un Spectromètre UV calibré pour lire la densité optique à 420 nm, en référence à de l'eau déminéralisée. Ce dosage colorimétrique permet donc d'établir une corrélation entre la densité optique et la quantité de P205 en solution puis de doser la solution d'extraction. Le résultat final est exprimée Masse de P2O5/Masse de Charbon actif, en %.
   Il faut noter que la méthode permet de doser en réalité l'espèce chimique phosphate (PO4-) qui est exprimée ensuite en P2O5.
** pH d'extraction :
   Le charbon actif (10g) est porté à ébullition dans de l'eau du robinet (150 ml) pendant 5 à 10 minutes. Le tout est filtré sur filtre plissé. Le filtrat est laissé refroidir à température ambiante. Un appareil de mesure de pH calibré permet de mesurer le pH du filtrat et donc le pH d'extraction.
*** Résistivité électrique en (Ohm.cm) :
   Le charbon actif en poudre est placé dans le corps cylindrique d'un moule isolant. Un piston vient appliquer une pression sur la poudre ainsi tassée. Un Ohmmètre calibré mesure la résistance électrique (R en Ohm) entre la base supérieure et inférieure du cylindre tassé de charbon actif. La section de ces bases est de 2 cm².
   La mesure se fait pour une pression de 130 Kg.F. Une échelle graduée en cm sur le piston permet de relever la hauteur du cylindre tassé de charbon actif (H en cm).
   La résistivité électrique est exprimée par (R x 2 cm²)/H en Ohm.cm.
**** Mesure de la surface BET (et des distributions poreuses) :
   Ces données sont issues d'une mesure d'isotherme d'adsorption d'Argon à 77°K effectuée par un appareil ASAP 2000M - Micromeritics.

| Caractéristiques | Méthode de mesure interne PICA ou ASTM | Valeurs |
|---|---|---|
| Adsorption de CCI4 en % | L22, n°6 ou ASTM D3467-94 | 60 à 120% |
| Adsorption de Butane en % | L23, n°3 ou ASTM D5742-95 | 22 à 47% |
| Indice d'iode en mg/g | L26, n°5 ou ASTM D4607-94 | > 900 |
| pH d'extraction | L21, n°7 | 1 à 2 |
| Surface BET en m²/g | L17, n°5 | > 900 |
| Résiduel P2O5 en % | L34, n°7 | 3 à 12% |
| Densité apparente en g/ml | L04, n°6 ou ASTM D2854-93 | 0,18 à 0,32 |
| Dureté Ball Pan Hardness % | L07, n°5 ou ASTM D3802-94 | 50 à 65% |
| Résistivité électrique En Ohm.cm | L14, n°6 | > 500 |
| | | |

Les plages indiquées, notamment pour les caractéristiques d'activité, représentent d'une part la variation du paramétrage possible du procédé, et, d'autre part, la variation du produit pour un même paramétrage de procédé (hétérogénéité due aux variations des matières premières, des conditions d'activation, ...). Ceci est classique pour toute fabrication industrielle de charbon actif en procédé continu ou discontinu.

L'exploitation du procédé par contacteur biologique a mis en évidence, dans certains cas, des problèmes particuliers liés à la nature des impuretés du charbon actif employé. Ainsi, lors de la mise en eau d'un filtre rempli de « PICABIOL ® », une grande part du résiduel de P2O5 est parfois lixiviée par l'eau. L'eau qui ressort du filtre est alors enrichie en P2O5 ou, plus exactement, en espèce chimique PO4- et, de plus, acidifiée par l'acide correspondant. L'exploitant d'une station de traitement d'eau, peut dans certains cas, en fonction des conditions locales du milieu naturel, avoir des problèmes pour pouvoir rejeter cette eau. Elle doit en effet satisfaire la législation locale en terme de qualité : teneur en P2O5 < 5 mg/l et pH > 6,5 pour la législation européenne. Ces valeurs ne peuvent être atteintes en sortie de filtre qu'après passage d'un grand volume d'eau. Il en découle que ces contraintes d'exploitation peuvent amener des surcoûts non négligeables pour le procédé, par la gestion de ces quantités d'eau importantes de qualité non potable. Ce relargage acide peut limiter les utilisations du « PICABIOL ® » pour tout type de filtre utilisé pour purifier un liquide ou une solution.

Une autre conséquence de ce résiduel de P2O5 peut être la fixation assez rapide d'ions Calcium. Une part du P2O5 reste présent sur la surface carbonée lors de la mise en eau du filtre. Ces espèces phosphorées peuvent alors fixer rapidement les ions Calcium présent dans l'eau à traiter par affinité chimique. Ceci peut initier des mécanismes de précipitation de Carbonate de Calcium et aboutir à un vieillissement prématuré du charbon actif par obstruction d'une partie de la porosité. On a ainsi observé lors du fonctionnement d'un filtre de « PICABIOL ® », par prélèvement d'échantillons, des teneurs en Calcium sur le charbon actif de l'ordre de 20000 ppm, 30000 ppm et 35000 ppm pour respectivement, 2 mois, 3 mois et 6 mois de durée de vie. Ces teneurs sont assez élevées pour polluer l'activité du charbon actif. Par ailleurs, cette précipitation de Calcium en surface du charbon actif peut être problématique lors de la régénération thermique du charbon actif usé. Lors du traitement de régénération thermique, ce Calcium a pour effet de modifier la porosité du charbon actif (voir : The Effect of Metals on Thermal Regeneration of Granular Activated Carbon, AWWA Research Foundation review, 1994).

L'invention a pour objet de pallier ces inconvénients tout en conservant les performances que peut déjà avoir un charbon actif tel que le «PICABIOL ® » grâce à un charbon actif, dont la porosité permet un très bon fonctionnement aussi bien en mode biologique qu'en mode par adsorption, et dont la pureté chimique permette une meilleure utilisation en traitement d'eau (avec notamment une minimisation des impuretés de phosphore et de l'acidité).

Elle vise en outre un procédé de fabrication d'un tel charbon actif, et son application au traitement de l'eau, notamment pour éliminer certains polluants.

L'invention propose à cet effet un charbon actif ayant les caractéristiques suivantes :
- indice CCl4 compris entre 120% et 190%,
- teneur en P2O5 au plus égale à 2 %,
- pH d'extraction supérieur à 7,
- densité apparente comprise entre 0,18 g/ml et 0,32 g/ml, et
- résistivité électrique inférieure à 1,5 Ohm.cm.

Ce charbon actif combine donc, notamment, une grande capacité d'adsorption, une faible quantité de P2O5 et un pH neutre ou basique.

Selon des dispositions préférées de l'invention, éventuellement combinées :
- ce charbon actif a une surface BET d'au moins 2000 m²/g, voire 1800 m²/g, et/ou il a un indice d'iode d'au moins 1750 mg/g et/ou il a un coefficient d'adsorption de butane de 45 % à 75 % ; il faut noter qu'il s'agit là de mesures de la capacité d'adsorption.
- ce charbon actif a une dureté Ball Pan Hardness au minimum de 65 % ; en effet les critères de choix d'un charbon actif peuvent intégrer des caractéristiques mécaniques.
- Il est obtenu sous forme de grain ou de poudre (répartition granulométrique dont la taille de particule est typiquement comprise entre 0,15 mm et 4,75 mm), ce qui le rend tout particulièrement apte à de nombreux usages en traitement d'eau.
- Il contient un volume de micropores d'au moins 0,50 ml/g et un volume de mésopores d'au moins 0,30 ml/g, ce qui contribue à garantir une grande capacité d'adsorption.

L'invention propose en outre un procédé adapté à préparer le charbon actif précité, c'est à dire un procédé de fabrication d'un charbon actif, comportant les étapes suivantes :
- préparation d'un charbon actif précurseur par activation chimique à l'acide phosphorique d'une matière première,
- neutralisation de ce précurseur par une solution aqueuse,
- activation thermique.

Il y a donc bien neutralisation des effets induits par la préparation du charbon actif précurseur tout en en conservant les avantages.

Selon des dispositions préférées de l'invention, éventuellement combinées :
- le précurseur est obtenu par activation chimique de bois à l'acide phosphorique, ce qui correspond notamment au cas du « PICABIOL ® »
- le précurseur a les caractéristiques suivantes :
   - indice CCI4 compris entre 60% et 120%,
   - teneur en P2O5 comprise entre 3 % et 12 %,
   - pH d'extraction compris entre 1 et 2,
   - densité apparente comprise entre 0,18 g/ml et 0,32 g/ml, et
   - résistivité électrique supérieure à 500 Ohm.cm ; les caractéristiques précitées sont celles dont les valeurs sont améliorées selon l'invention ; ce précurseur a de préférence en outre les caractéristiques suivantes :
   - coefficient d'adsorption de butane de 22 % à 47 %,
   - indice d'iode d'au moins 900 mg/g,
   - surface BET d'au moins 900 m²/g,
   - dureté Ball Pan Hardness comprise entre 50 et 65 % ; il est à noter que la combinaison de ces caractéristiques correspond à celles qui définissent un charbon actif de type « PICABIOL ® ».
- l'étape de neutralisation est effectuée avec de l'urée ou de l'ammoniaque ; ces bases se révèlent en effet à la fois efficaces et de prix modéré.
- Lors de cette étape de neutralisation, le rapport Base/Précurseur est avantageusement compris entre 0,1 et 0,3 ce qui correspond à un excès de base par rapport à ce qui est strictement nécessaire pour neutraliser l'acide phosphorique résiduel.
- Le rapport Eau/Précurseur est de préférence compris entre 1,5 et 2,5 ce qui en pratique donne un aspect mouillé au produit, permettant une bonne diffusion des réactifs dans la porosité du matériau carboné.
- Il peut y avoir dans l'étape de neutralisation un séchage pour, le cas échéant, ramener l'humidité du produit à une valeur inférieure à 10 %.
- L'étape d'activation est conduite à une température réactionnelle comprise entre 800 °C et 1000 °C, ce qui correspond à un bon compromis réactionnel.
- Cette étape d'activation est réalisée dans un four en présence de vapeur d'eau et/ou de dioxyde de carbone.
- Le précurseur peut avoir en pratique une granulométrie supérieure au tamis ASTM n° 70 (212 microns) ; il y a alors avantageusement, après activation, une étape de mise à granulométrie.

L'invention propose plusieurs applications pour le charbon actif défini ci-dessus : il s'agit notamment de l'utilisation du charbon actif pour le traitement d'eau comportant des matières organiques, de l'utilisation du charbon actif pour l'élimination de l'atrazine, ou encore de l'utilisation du charbon actif pour l'élimination des chloramines.

### Description

Des objets, caractéristiques et avantages de l'invention ressortent de la description qui suit, donnée à titre illustratif non limitatif en regard des dessins annexés sur lesquels :
- la figure 1 est un schéma de principe du procédé de fabrication d'un charbon actif conforme à l'invention,
- la figure 2 est un graphe corrélant, pour trois charbons actifs, dont celui de l'invention, la concentration à l'équilibre en atrazine (microgrammes par litre) à la capacité d'adsorption d'atrazine (microgrammes par milligramme),
- la figure 3 est un graphe corrélant, pour les trois mêmes charbons actifs, la charge en charbon actif (en mg/l) à l'abattement en densité optique (en %), et
- la figure 4 est un graphe montrant, pour ces trois charbons actifs, l'abattement en chloramines (en %).

Le procédé de l'invention peut s'analyser comme l'addition d'un traitement particulier à un procédé connu, tel que le procédé de fabrication d'un charbon actif type « PICABIOL ® », c'est à dire faisant intervenir, une activation chimique à l'acide phosphorique. Il est rappelé ici que le charbon actif « PICABIOL ® » est fabriqué industriellement par activation chimique à l'acide phosphorique de granulés de bois entre 400-500°C. La taille de particule du précurseur granulaire est de préférence supérieure en dimension au tamis ASTM n° 70 (ouverture de maille = 212 µm). Cette dimension est ici arbitrairement prise pour définir la notion de Grain (taille supérieure à ce seuil) et de Poudre (taille inférieure à ce seuil).

Selon l'invention le précurseur est alors traité successivement de la façon suivante :

### - Etape 1 dite de Neutralisation :

Le charbon actif précurseur est mis en contact avec une solution aqueuse d'une base pour neutraliser l'acidité du charbon actif. La base utilisée est avantageusement l'urée ou l'ammoniaque ; elle est mise en solution aqueuse à température ambiante. Le rapport massique « Base/Précurseur » est de préférence compris entre 0,1 et 0,3 ; il correspond à un excès de la stoechiométrie de la réaction de neutralisation du résiduel d'acide phosphorique par la base.

Les quantités de solution basique sont avantageusement ajustées pour obtenir un charbon actif d'aspect mouillé, ce qui correspond en pratique à un rapport massique « Eau/Précurseur » compris entre 1,5 et 2,5. Cette quantité permet une bonne diffusion des réactifs dans la porosité du matériau carboné.

Industriellement, ce traitement peut être effectué en batch ou en continu.

Cette étape de Neutralisation est si nécessaire suivie d'un séchage pour ramener le produit à une teneur en humidité inférieure à 10%

### - Etape 2 dite d'Activation thermique :

Le charbon actif neutralisé est ensuite introduit dans un four d'activation en condition dite « physique » ou « thermique ». Ce four peut être un four tubulaire rotatif en continu, ou un four en lit fluidisé. Les conditions d'activation physique sont principalement :
* Température réactionnelle comprise entre 800 et 1000°C.
* Gaz activant introduit dans le four : vapeur d'eau ou dioxyde de carbone
* Mode de chauffage : direct ou indirect.

Pour conduire ce procédé d'activation, la durée d'activation ou autrement dit le temps de séjour vont fixer les caractéristiques du produit fini, pour une température donnée. Ce temps de séjour ne peut être défini précisément pour un système en continu, car il dépend de la technologie employée et des caractéristiques géométrique du four. Une autre façon de préciser le degré d'activation lié au temps d'activation est d'exprimer le rendement massique obtenu : plus le temps d'activation est long, plus l'activité obtenue est forte et par conséquent plus le rendement massique est faible par consommation de carbone. Enfin, l'activité finale du produit est également conditionnée par le niveau d'activité du précurseur.

Les caractéristiques du produit neutralisé et activé par ce procédé sont alors les suivantes :

| Caractéristiques | Méthode de mesure interne PICA ou ASTM | Valeurs |
|---|---|---|
| Adsorption de CCl4 en % | L22, n°6 ou ASTM D3467-94 | 120 à 190% |
| Adsorption de Butane en % | L23, n°3 ou ASTM D5742-95 | 45 à 75% |
| Indice d'iode en mg/g | L26, n°5 ou ASTM D4607-94 | > 1750 |
| Surface BET en m²/g | L17, n°5 | > 1800 |
| Densité apparente en g/ml | L04, n°6 ou ASTM D2854-93 | 0,18 à 0,32 |
| pH d'extraction | L21, n°7 | 7 à 11 |
| Résiduel P2O5 en % | L34, n°7 | < 2% |
| Dureté Ball Pan Hardness % | L07, n°5 ou ASTM D3802-94 | > 65% |
| Résistivité électrique En Ohm.cm | L14, n°6 | < 1,5 |

Les plages indiquées, notamment pour les caractéristiques d'activité, proviennent d'une part de la variation du paramétrage possible du procédé, et, d'autre part, de la variation du produit pour un même paramétrage de procédé (hétérogénéité due aux variations des matières premières, des conditions d'activation, ...). Ceci est classique pour toute fabrication industrielle de charbon actif en procédé continu ou discontinu.

On peut constater que le traitement appliqué a eu pour effet :
- de volatiliser ou sublimer les espèces phosphorées du charbon actif dans le flux gazeux et de réduire d'autant l'acidité du charbon actif. Le niveau de P2O5 résiduel est en effet fortement diminué et le produit ne présente plus de caractère acide lors d'une mise en eau.
- de structurer le squelette carboné à haute température et de le rendre plus résistant mécaniquement et conducteur électriquement (dureté et résistivité). Cette structuration est assimilable à une étape de carbonisation donnant un matériau plus « graphité ».
- de créer une porosité supplémentaire par un mécanisme d'oxydation contrôlée du carbone et d'augmenter d'autant la capacité d'adsorption. Cette capacité d'adsorption correspond au volume poreux ; elle se caractérise par plusieurs méthodes et caractéristiques toutes liées entre elles, à savoir : la capacité CCI4 ou butane, l'indice d'iode, ou la surface BET. C'est ainsi que le seuil de 120 % pour la capacité CCI4 correspond sensiblement au seuil de 45 % pour le butane, au seuil de 1750 mg/g pour l'indice d'iode et de 1800 m²/g pour la surface BET.
   Le niveau de capacité obtenu sera dépendant du temps d'activation et de l'activité initiale du produit de départ.

### - Etape 3 dite de Mise à Granulométrie :

Le produit est alors mis à la granulométrie désirée, par tamisage, associé ou non à une unité de concassage pour les refus de tamisage. Ceci permet d'obtenir la répartition granulométrique voulue pour du charbon actif en grain. Pour du charbon actif en poudre, il est nécessaire de procéder à un broyage ou de récupérer les fractions fines de tamisages.

Ce procédé aboutit donc à un nouveau charbon actif assez remarquable possédant les avantages suivants (ses propriétés analysées ci-dessus ne sont pas modifiées par la mise à la granulométrie) :
- Faible niveau résiduel en P2O5 n'entraînant pas de lixiviation ni d'acidification lors d'une mise en eau.
- Gain de capacité impliquant un fonctionnement beaucoup plus efficace en mode par adsorption.

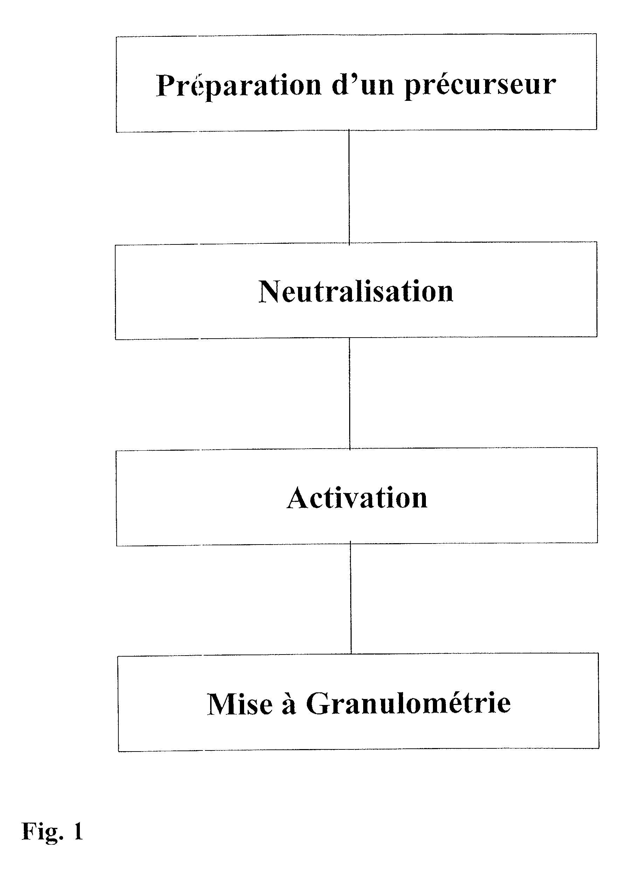

La figure 1 représente de façon schématique l'ensemble du procédé de fabrication tel qu'il vient d'être décrit.

Les exemples ci-dessous de mise en oeuvre de l'invention précisent certaines conditions de fabrication et les caractéristiques des produits correspondants (les produits selon l'invention sont désignés ci-dessous sous la référence GX 191 ER . Les masses sont données pour une base sèche de matière solide.

### Exemple 1

a) Précurseur sélectionné (obtenu selon le procédé défini à propos du « PICABIOL ® »:
   Granulométrie : Mesh 6x16
   Activité CCI4 : 120%
   pH : 1,9
   Résiduel P2O5 : 4%
b) Neutralisation :
   Ratio massique Urée/Précurseur : 0,25
   Ratio massique Eau/Précurseur : 2,2
   Mélange en batch sous agitation pendant quelques minutes
   Séchage à 110°C en four rotatif
c) Activation :
   Four rotatif d'activation par alimentation continue en produit à activer
   Débit d'alimentation de précurseur : 700 Kg/h en moyenne
   Température : 850 à 900°C
   Gaz activant : vapeur d'eau à 300 Kg/heure en moyenne
   Quantité traitée : 1150 Kg
   Le rendement massique de ce traitement thermique est de : 40%
d) Produit obtenu après tamisage :
   Granulométrie : Mesh 10x25
   Activité CCI4 : 137%, ce qui correspond à une surface BET de 1900 m²/g
   Densité apparente : 0,24 g/ml
   pH : 8
      Résiduel P2O5 : 0,6%

Cet exemple montre le changement significatif de la pureté chimique du produit ainsi qu'un gain d'activité.

### Exemple 2

a) Précurseur sélectionné :
   Granulométrie : Mesh 16x60
   Activité CCl4 : 75%
   pH : 1,5
   Résiduel P2O5 : 7,5%
b) Neutralisation :
   Ratio massique Urée/Précurseur : 0,18
   Ratio massique Eau/Précurseur : 2
   Mélange en batch sous agitation pendant quelques minutes
   Séchage à 110°C en four rotatif
c) Activation :
   Four rotatif d'activation par alimentation continue en produit à activer
   Débit d'alimentation de précurseur : 220 à 240 Kg/h
   Température : entre 820 et 880°C
   Gaz activant : vapeur d'eau entre 200 et 250 Kg/h
   Quantité traitée : 10900 Kg
   Le rendement massique de ce traitement thermique est de : 34%
d) Produit obtenu après tamisage :
   Granulométrie : Mesh 40x100
   Activité CCl4 : 148% en valeur moyenne
   Indice d'iode : 1900 mg/g
   Densité apparente : 0,24 g/ml
   pH : 8
   Résiduel P2O5 : 1%
   Résistivité électrique : 0,6 Ohm.cm

Cet exemple montre le changement significatif de la pureté chimique et de la capacité d'adsorption du charbon actif. Une porosité importante a été développée. La surface BET de ce produit est de 2250 m²/g. Les volumes microporeux et mésoporeux sont, respectivement, de 0,77 ml/g et 0,45 ml/g. Enfin, le diamètre médian de pore est de 15,4 Å.

### Exemple 3

a) Précurseur sélectionné :
   Granulométrie : Mesh 16x30
   Activité CCl4 : 100% en moyenne
   pH : 1,5
   Résiduel P2O5 : 3%
b) Neutralisation : aucune
   Ratio massique Urée/Précurseur : 0
   Ratio massique Eau/Précurseur : 0
c) Activation :
   Four rotatif d'activation par alimentation continue en produit à activer
   Débit d'alimentation de précurseur : 160 Kg/h en moyenne
   Température : entre 830 à 880°C
   Gaz activant : vapeur d'eau à 290 Kg/h en moyenne
   Quantité traitée : 9280 Kg
   Le rendement massique de ce traitement thermique est de : 33%
d) Produit obtenu en sortie de four :
   Granulométrie : passant Mesh 16
   Activité CCl4 : 148 %
   Indice d'iode : 1750 mg/g
   Densité apparente : 0,2 g/ml
   pH : 3,7
   Résiduel P2O5 : 2%
   Résistivité électrique : 0,4 Ohm.cm

Cet exemple montre clairement que sans étape de neutralisation, le produit après traitement thermique voit son pH augmenter mais pas suffisamment pour être proche de la neutralité. Un gain d'activité est néanmoins obtenu.

Tous ces exemples de fabrication et de produits obtenus ne sont pas limitatifs dans le procédé et son paramétrage.

Le fonctionnement en mode par adsorption du produit GX 191 ER a été validé expérimentalement par des tests en milieu aqueux illustrés dans les exemples 4,5 et 6 suivants:

### Exemple 4: Capacité d'adsorption d'Atrazine (Herbicide présent dans l'eau).

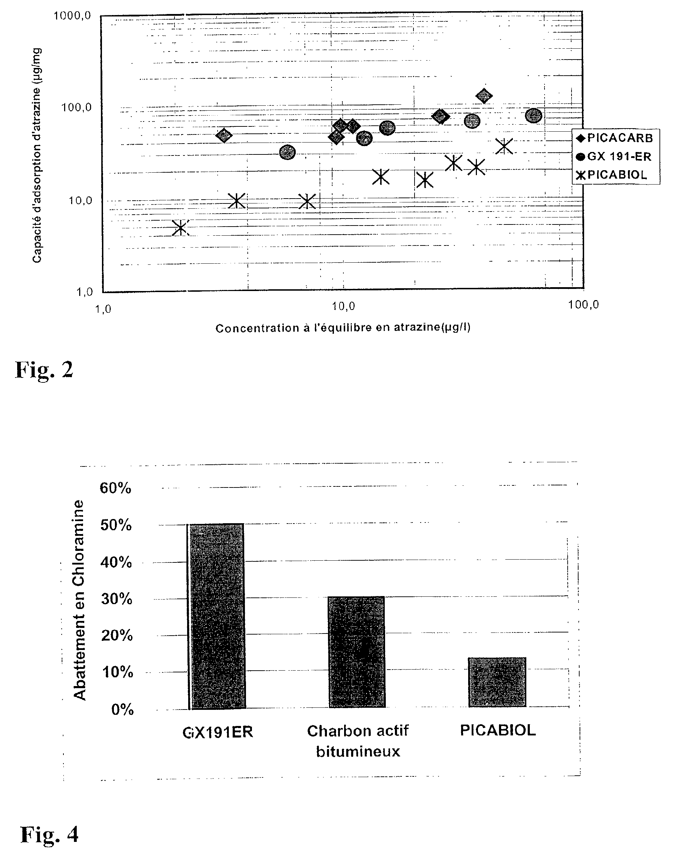

Des isothermes d'adsorption à température ambiante ont été réalisés en mettant en contact différentes masses de charbon actif réduit en poudre avec un volume fixe d'une solution aqueuse reconstituée (eau déminéralisée) d'atrazine à 100 µg/l. Après un temps de contact de 5 jours sous agitation et à l'abris de la lumière, l'eau est filtrée sur filtre plissé puis dosée en Atrazine par un dispositif HPLC et un détecteur UV (matériel WATERS). Les résultats sont ensuite exprimés graphiquement sous la forme classique de FREUNDLICH en échelle Log/Log, avec la Capacité d'adsorption en Atrazine par masse de charbon actif (en µg/mg) en fonction de la concentration à l'équilibre en Atrazine (en µg/l). Ces conditions et cette forme graphique permettent de comparer l'efficacité de différents charbons actifs à l'équilibre (voir la figure 2).

Il ressort que le produit GX191ER, issu de la fabrication de l'exemple 1, a une efficacité aussi bonne qu'un charbon actif de base minéral, PICACARB, et plus élevé qu'un charbon actif type « PICABIOL ® ». La différence de capacité pour une même concentration à l'équilibre est supérieure au minimum d'un facteur 3.

Cette efficacité démontrée pour un Herbicide connu dans le traitement d'eau peut être généralisée à d'autres pesticides ou espèces organiques polluantes de taille moléculaire semblable.

### Exemple 5 : capacité d'adsorption de Matières Organiques d'eau de rivière.

L'essai consiste à mettre en contact un volume fixe d'une eau de rivière (Le Cher - France) avec différentes masses de charbon actif réduit en poudre, pendant un temps de 2 heures sous agitation et à 25°C, et de mesurer l'abattement en Matières Organiques de l'eau après filtration. La concentration en Matières Organiques est mesurée par Spectrométrie UV et elle est exprimée en Densité Optique à 254 nm. Cette longueur d'onde est caractéristique des liaisons chimiques entre les atomes de Carbone et Oxygène.

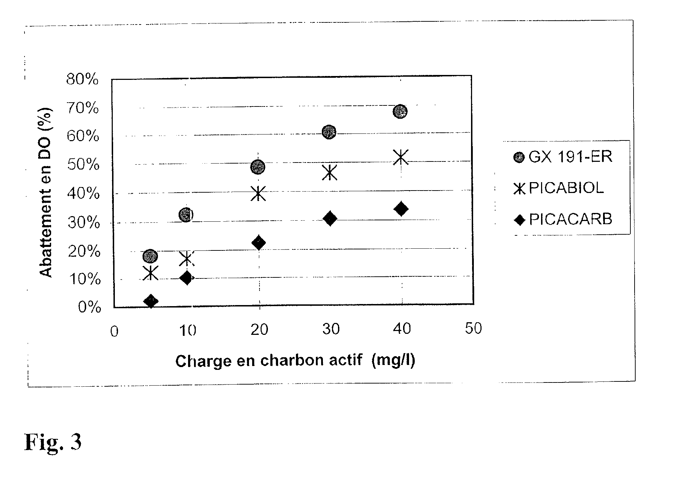

Les résultats sont représentés par un graphe exprimant l'abattement de Densité Optique (DO initial - DO/DO initial) en fonction de la concentration en Charbon actif dans l'eau (voir la figure 3).

Les Matières Organiques sont des composés de poids moléculaire assez élevé et donc de taille importante. Pour adsorber ces composés, la porosité doit être adaptée pour faciliter leur accessibilité. Il faut remarquer que les matières organiques, en quantité et qualité, sont spécifiques à l'eau échantillonnée, et donc conditionnent en partie les résultats. Un charbon actif à porosité assez fermée, PICACARB, est moins performant que des charbons actifs, PICABIOL et GX191ER, à porosité plus ouvertes. Le GX191ER, issu de la fabrication de l'exemple 1, se distingue aussi par son activité globale plus élevée et donc une plus forte capacité.

### Exemple 6 : Capacité d'adsorption de Monochloramine (NH2Cl)

Comme on le sait, il s'agit d'un polluant présent dans l'eau, produit par le traitement de Chloration avec la présence d'ammoniaque.

Les capacités ont été mesurées à partir d'une solution aqueuse (eau déminéralisée) reconstituée de Monochloramine (NH2CI) à 3 mg/l. La Monochloramine est préparée dans l'eau par réaction des quantités suffisantes de Chlorure d'ammonium, NH4CI, et d'Hypochlorite de Sodium, NaClO. Le pH est ajusté au dessus de 11 par ajout de Soude concentrée. La méthode de dosage des Chloramines dans l'eau utilisée est celle de la norme NF T 90-038, soit la méthode par dosage colorimétrique avec le réactif DPD du Chlore combiné (correspondant à la Monochloramine si pH >6) qui représente la différence entre le Chlore total et le Chlore libre.

L'essai consiste ensuite à introduire dans un volume fixe de cette eau reconstituée (1000 ml) sous agitation avec un barreau magnétique, une quantité fixe de charbon actif réduit en poudre (250 mg) puis, au bout d'un temps de contact défini (1 minute), de filtrer rapidement la solution sur filtre plissé avec une pompe à vide à eau. Le temps de filtration est imposé entre 10 et 15 secondes pour récupérer 250 ml de filtrat. Le filtrat est finalement dosé en Monochloramine pour déterminer l'abattement en concentration (C initial - C / C initial) - voir la figure 4.

Le GX 191 ER, issu de la fabrication de l'exemple 1, réduit de moitié la concentration en NH2CI de l'eau. Le temps de contact assez court permet de montrer une cinétique d'adsorption rapide, favorisée par une porosité ouverte permettant une bonne accessibilité du polluant. La forte capacité permet de plus une forte adsorption.

Tous ces exemples illustrent donc la très bonne capacité d'adsorption du charbon actif selon l'invention vis à vis de polluants dans de l'eau à traiter. Ces efficacités sont directement liées à l'importante porosité développée par ce produit.

Ils ne sont pas limitatifs dans les conditions expérimentales d'utilisation ni dans les types de polluants à adsorber.

### Exemple 7

Enfin, une autre utilisation possible du produit GX 191 ER est son incorporation dans tout système d'électrode dite à double couche pour une application connue sous le nom de « Super Capacité Electrique». Une Super Capacité est une unité qui permet de stocker et de délivrer rapidement du courant électrique. L'avantage de ces unités par rapport à des batteries conventionnelles par exemple, est de pouvoir délivrer de fortes puissances sur un nombre important de cycle Charge/Décharge.

Le charbon actif compose, en partie, l'électrode qui sert à piéger les ions d'un électrolyte aqueux ou organique et donc à stocker la quantité de courant correspondante ; l'adsorption de ces ions est favorisée par un potentiel électrique aux bornes de 2 électrodes (charge). Cette quantité de courant peut être restituée de façon réversible pour produire du courant (décharge). La faible résistivité électrique du GX 191 ER permet également un bon écoulement des charges électriques. Les Supercapacités permettent ainsi de fournir de fortes puissances électriques. L'invention ne porte pas sur cette application aussi celle-ci ne sera pas décrite plus en détail. Simplement, l'innovation permet d'obtenir un produit dont certaines caractéristiques sont primordiales et nécessaires pour cette application : une forte capacité d'adsorption, une porosité adaptée pour l'adsorption des ions et une relativement bonne conductivité électrique.

## Revendications

1. Charbon actif ayant les caractéristiques suivantes :
• indice CCI4 compris entre 120% et 190%,
• teneur en P2O5 au plus égale à 2 %,
• pH d'extraction supérieur à 7,
• densité apparente comprise entre 0,18 g/ml et 0,32 g/ml, et
• résistivité électrique inférieure à 1,5 Ohm.cm.

2. Charbon actif selon la revendication 1, **caractérisé en ce qu'**il a une surface BET d'au moins 2000 m²/g.

3. Charbon actif selon la revendication 1, **caractérisé en ce qu'**il a une surface BET d'au moins 1800 m²/g.

4. Charbon actif selon l'une quelconque des revendications 1 à 3, **caractérisé en ce qu'**il a un indice d'iode d'au moins 1750 mg/g.

5. Charbon actif selon l'une quelconque des revendications 1 à 4, **caractérisé en ce qu'**il a un coefficient d'adsorption de butane de 45 % à 75 %.

6. Charbon actif selon l'une quelconque des revendications 1 à 5, **caractérisé en ce qu'**il a une dureté Ball Pan Hardness au minimum de 65 %.

7. Charbon actif selon l'une quelconque des revendications 1 à 6, **caractérisé en ce qu'**il a une répartition granulométrique dont la taille de particule est inférieure à 4,75 mm et supérieure à 0,15 mm.

8. Charbon actif selon l'une quelconque des revendications 1 à 6, **caractérisé en ce que** c'est une poudre de taille inférieure à 212 microns.

9. Charbon actif selon l'une quelconque des revendications 1 à 8, **caractérisé en ce qu'**il contient un volume de micropores d'au moins 0,50 ml/g et un volume de mésopores d'au moins 0,30 ml/g.

10. Procédé de fabrication d'un charbon actif, comportant les étapes suivantes :
• préparation d'un charbon actif précurseur par activation chimique à l'acide phosphorique d'une matière première,
• neutralisation de ce précurseur par une solution aqueuse,
• activation thermique.

11. Procédé selon la revendication 10, **caractérisé en ce que** le précurseur est obtenu par activation chimique de bois à l'acide phosphorique.

12. Procédé selon la revendication 10 ou la revendication 11, **caractérisé en ce que** le précurseur a les caractéristiques suivantes :
• indice CCI4 compris entre 60% et 120%,
• teneur en P2O5 comprise entre 3 % et 12 %,
• pH d'extraction compris entre 1 et 2,
• densité apparente comprise entre 0,18 g/ml et 0,32 g/ml, et
• résistivité électrique supérieure à 500 Ohm.cm.

13. Procédé selon la revendication 12, **caractérisé en ce que** le précurseur a en outre les caractéristiques suivantes :
• coefficient d'adsorption de butane de 22 % à 47 %,
• indice d'iode d'au moins 900 mg/g,
• surface BET d'au moins 900 m²/g,
• dureté Ball Pan Hardness comprise entre 50 et 65 %.

14. Procédé selon l'une quelconque des revendications 10 à 13, **caractérisé en ce que** l'étape de neutralisation est effectuée avec de l'urée ou de l'ammoniaque.

15. Procédé selon l'une quelconque des revendications 10 à 14, **caractérisé en ce que** le rapport Base/Précurseur est compris entre 0,1 et 0,3.

16. Procédé selon l'une quelconque des revendications 10 à 15, **caractérisé en ce que** le rapport Eau/Précurseur est compris entre 1,5 et 2,5.

17. Procédé selon l'une quelconque des revendications 10 à 16, **caractérisé en ce que** l'étape de neutralisation comporte un séchage pour ramener l'humidité du produit à une valeur inférieure à 10 %.

18. Procédé selon l'une quelconque des revendications 10 à 17, **caractérisé en ce que** l'étape d'activation est conduite à une température réactionnelle comprise entre 800 °C et 1000 °C.

19. Procédé selon l'une quelconque des revendications 10 à 18, **caractérisé en ce que** l'étape d'activation est réalisée dans un four en présence de vapeur d'eau et/ou de dioxyde de carbone.

20. Procédé selon l'une quelconque des revendications 10 à 19, **caractérisé en ce que** le précurseur a une granulométrie supérieure au tamis ASTM n° 70 (212 microns), et il y a une étape de mise à granulométrie.

21. Utilisation du charbon actif selon l'une quelconque des revendications 1 à 9 pour le traitement d'eau comportant des matières organiques.

22. Utilisation du charbon actif selon l'une quelconque des revendications 1 à 9 pour l'élimination de l'atrazine.

23. Utilisation du charbon actif selon l'une quelconque des revendications 1 à 9 pour l'élimination des chloramines.
